# EUROPEAN PATENT APPLICATION

(11) **EP 3 800 624 A1**
(43) Date of publication of application: **07.04.2021**
(21) Application number: 20199935.6
(22) Date of filing: 02.10.2020
(51) Int. Cl.: G08G 1/0967, G01C 21/36, H04W 4/44

(54) **METHOD AND SYSTEM FOR PROVIDING USERS WITH PROMPT INFORMATION, INSTRUCTIONS AND ADVANCED VIRTUAL ROAD SIGNPOSTING ABOUT SUPERVISED ROAD CONDITIONS**

(30) Priority: 03.10.2019 IT 201900017909
(71) Applicant: Quandopasso S.r.l.s., 10129 Torino (IT)
(72) Inventor: PASOTTO, Giovanni, I-10129 TORINO (IT); INVERNIZZI, Fabrizio, I-10129 TORINO (IT); MELZI, Maurizio Andrea, I-10129 TORINO (IT)
(74) Representative: Mozzi, Matteo

(57) **Abstract**

Method for providing users with prompt information, instructions and advanced virtual road signposting about supervised road conditions, comprising steps of:
- running an application software on a plurality of mobile devices (102), one or more mobile devices of said plurality of mobile devices (102) being associated to a user on a vehicle travelling a supervised road network (104), the application software generating an unique identifier (UID) to be associated to the mobile device (102);
- providing, by each mobile device of said plurality of mobile devices (102), an application server (101) with a first plurality of information (IF1) representative of the relative vehicle travelling on a portion (104') of the supervised road network (104) on which the vehicle is travelling associating to said first plurality of information (IF1) the unique identifier (UID) of the mobile device (102), said first plurality of information (IF1) comprising at least the position of the mobile device (102);
- collecting, by the application server (101), the first plurality of information (IF1) and the unique identifier (UID) received by each mobile device of said plurality of mobile devices (102);
- recognizing, by the application server (101), the presence of the application software running on a mobile device of said plurality of mobile devices (102) in a vehicle on a portion (104') of the supervised road network (104);
- sending, by the application server (101), to said mobile device (102) a message (M) comprising information representative of the road traffic condition of the portion (104') of the supervised road network (104) identified by the position of the mobile device (102), on the basis of the unique identifier (UID) of said mobile device (102);
- providing, by the application server (101), a set of virtual road signposts (105), in fixed locations on the supervised road, with associated positions and directions;
- recognizing, by a mobile device of said plurality of mobile devices (102) running the application software, the presence of at least one virtual road signpost (105') of the set of virtual road signposts (105) provided by the application server (101), on the portion (104') of the supervised road network (104);
- receiving, by said mobile device of said plurality of mobile devices (102), the recognized at least one virtual road signpost (105').

## Description

### ▪ FIELD OF THE INVENTION

The present invention relates to supervising road conditions and traffic flow and, namely, to a method and system for providing users with prompt information, instructions and advanced virtual signposting about supervised road conditions.

### ▪ BACKGROUND OF THE INVENTION

In recent years, technology has somehow improved the timing, punctuality and accuracy of traffic information provided to travelling users, e.g. motorists.

Most of these improvements have been obtained using mobile devices, connected to a data communication network.

Nowadays, however, the available systems and applications providing this kind of information in this specific use are incomplete and inaccurate in terms of official and user specific directions, as well as in terms of collection of information about motorists travelling on a specific road (e.g. speed and position of a vehicle and so on), thus limiting the possibilities of managing the flow of traffic, both in normal traffic conditions and in road emergency situations.

Said systems are strictly related to providing static information to the user, without any way for a road manager to dynamically change conditions needed to show him/her (position, time, type of vehicle, speed, or other) or execute other advanced operations on the terminal such as, for example, send information on demand back to the cloud, compose complex text on the fly, enable a virtual speed limiter, force a navigator route change.

Additionally, said kind of information is commonly provided and limited to visualize graphics and/or text messages on the devices' GUI (Graphical User Interface), therefore requiring direct handling of the device by a motorist and so potentially inducing safety risks for the motorist him/herself and/or any other motorists or users on the road.

Furthermore, it is felt the need of providing dynamic and real-time solutions to support users when approaching difficult or dangerous traffic condition that can help them to get correct directions and decisions under control of a supervising traffic road manager, without requiring expensive dedicated road infrastructure to be realized as pre-condition.

In detail, in the supervising of road, bridge and/or tunnel traffic conditions, the communication from a traffic manager and/or a police authority to motorists, can be performed, as of today, using the following methods.

The first one is performed by using fixed or temporary road signals and Variable Message Systems (VMS).

Road signals need to be transported and physically fixed to parts of the road infrastructure, thus making impossible to adapt them to unplanned and changing traffic conditions.

VMS are comprised by a permanent structure, e.g. a display and an IT system allowing to display text and images on such display.

The motorists are expected to read the road signals and/or the VMS in order to be acknowledged of shown information.

However, if a motorist is focusing his/her attention to a special driving situation, or his/her sight angle is obstructed by another vehicle, he/she may not be able to see and read the road signals and/or the VMS.

In addition, the costs of VMS limit the number of possible installations which can be distributed along a road.

Therefore, a fresh and important information about a traffic event, or specific instructions to manage the traffic flow, may not be visible to motorists who have already passed the last available VMS and who have not yet reached the area or road section affected by the traffic event.

The second one is performed by broadcasting traffic condition information via recorded audio messages, which are usually transmitted at fixed and predefined time intervals by radio broadcasters.

However, this second method does not allow the management of the traffic flow in a continuous and dynamic way, in particular when managing rapid changing traffic conditions.

This system requires the motorists to turn on their radio receiver and tune it to the frequency of the broadcasters who are covering the relevant road area at the time of the messages.

The broadcasted information requires all listeners to hear the full content in order to find specific information that may be relevant to their trip and their current position on the supervised road network or on a portion of the supervised road network.

However, this does not allow to provide too many detailed information, since a trade-off between message length and attention span of the listeners is needed.

At the same time, it is not feasible to provide the information message in more than one language simultaneously, therefore limiting the effectiveness for tourists, foreign drivers or on roads crossing national borders.

The third one may be performed by publishing traffic information on websites or web-based news feeds.

These information bulletins are normally produced in text form and require the users to actively browse a web-site, or a list of news through a dedicated app on their mobile devices.

However, while this solution is suitable during the planning phase of a travel, it is not feasible for a motorist during driving.

Moreover, the use of mobile device GUIs by drivers have become among the most frequent causes of accidents and deaths on the road and are forbidden by most national laws.

### ▪ SUMMARY OF THE INVENTION

It is the object of the present invention to devise and provide a method for providing users with prompt information, instructions and advanced virtual road signposting about supervised road conditions which allows to solve, at least partially, the drawbacks mentioned above with reference to the prior art, timely providing the users with as much as possible updated and reliable information and virtual road signposting about the road conditions of the road on which they are travelling, as well as making it possible for a road manager to instruct users on the behaviors to be followed in order to maximize traffic flow, reduce waiting times and minimizing impediments to smooth circulation in safe conditions.

Such an object is achieved by a method according to claim 1.

Another object of the present invention is a system for providing users with prompt information, instructions and advanced virtual road signposting about supervised road conditions.

Preferred embodiments of said method and system are defined in the relative dependent claims.

The method and system according to the present invention are configured to execute, under control of a cloud component, actions on a user terminal (e.g. a mobile device) such as, for example, providing users with prompt information as well as instructions to the users on the behaviors to be followed in order to maximize traffic flow, reduce waiting times and minimize impediments to smooth circulation in safe conditions and advanced virtual signposting about supervised road conditions.

### ▪ BRIEF DESCRIPTION OF THE FIGURES

Further features and advantages of the device and method according to the present invention will become apparent in the following description which shows preferred embodiments, given by way of indicative, non-limiting examples, with reference to the accompanying drawings, in which:
Fig. 1 schematically shows, by means of a block diagram, a system for providing users with prompt information, instructions and advanced virtual road signposting about supervised road condition, according to the present invention;
Fig. 2 schematically shows a road network on which the system of Fig. 1 is implemented;

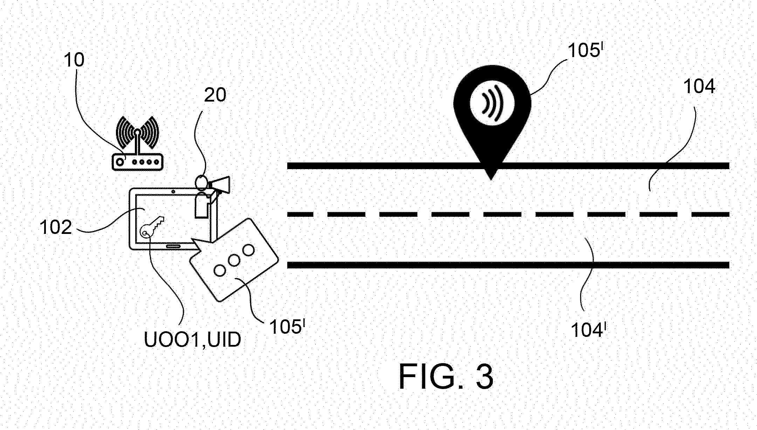

Fig. 3 schematically shows a portion of a road network on which the system of Fig. 1 is implemented;
Fig. 4 schematically shows, be means of a block diagram, a finite state machine representing the operation of a component of the system of Fig. 1;
Fig. 5 schematically shows, by means of a block diagram, a method for providing users with prompt information, instructions and advanced virtual road signposting about supervised road condition;
Fig. 6 schematically shows an advanced virtual road signpost according to the present invention;
Fig. 7 schematically shows, by a block diagram, the setting of a state of an action associated to the advanced virtual road signpost of the Fig. 6, and
Fig. 8 schematically shows an example of operation (action and reactivation, in this example) of an advanced virtual road signpost of the present invention.

### ▪ DETAILED DESCRIPTION

With reference to the aforesaid figures, according to the present invention, it will now be described a system for providing users with prompt information, instructions and advanced virtual road signposting about supervised road conditions, hereinafter for the sake of brevity also simply system, which has been generally indicated by the reference numeral 100.

It is worth noting that for the purposes of the present description, with "advanced", with reference to the "virtual road signposting", it is meant that the virtual road signposting are not merely a replication of generic messages or advices to the oncoming traffic but, as explained in detail in the following, given their capability of being selective in the choice of targeted subjects (e.g. by application software running on one or more mobile device of a user present on each vehicles), their adaptability in performing actions (such as delivering messages) upon the recognition of definite policies (such as direction, speed and position of the aforementioned application software), and their ability to reiterate said actions (in the form of a message) upon verification of other configurable measurement (i.e. the reduced speed and/or the limited change in position over time of a app on board a queued vehicle), are able to perform a range of operations that enables a road manager to effectively interact in real time, with the traffic flow, vehicle by vehicle. This is coupled by the application software running on a mobile device, which is configured to provide and receive such information in a responsive way.

Furthermore, it is worth noting that for the purposes of the present description, "user/s" may be intended as motorists, motorcyclists, bikers, truckers and generally any drivers of a vehicle having two- or three- or four-wheels or with more than four wheels, e. g. motorcycles, cars, buses, trucks, heavy vehicles for the transport of explosive, dangerous or flammable materials.

In addition, it is worth noting that for the purposes of the present description, "supervised road conditions" may be intended as traffic condition, such as, heavy traffic, accident, road works, dangerous and hazardous transports, emergency vehicles in transit, speed limits, and so on.

▪ It is worth nothing that for the purposes of the present description, the term "information provided to users" may be intended as a generic action to be performed on an user terminal (e.g. a mobile device) under the control of a cloud component when specific conditions are met (e.g. position, speed, direction). Such an action can be for example, but not limited to, playing audio file, reading a text by means of a Text To Speech (TTS) technology implementation, reconfiguring a navigation system, activating a speed limit warning, sending information back to the cloud, storing the position of a mobile device on a specific location on the mobile device, and so on.

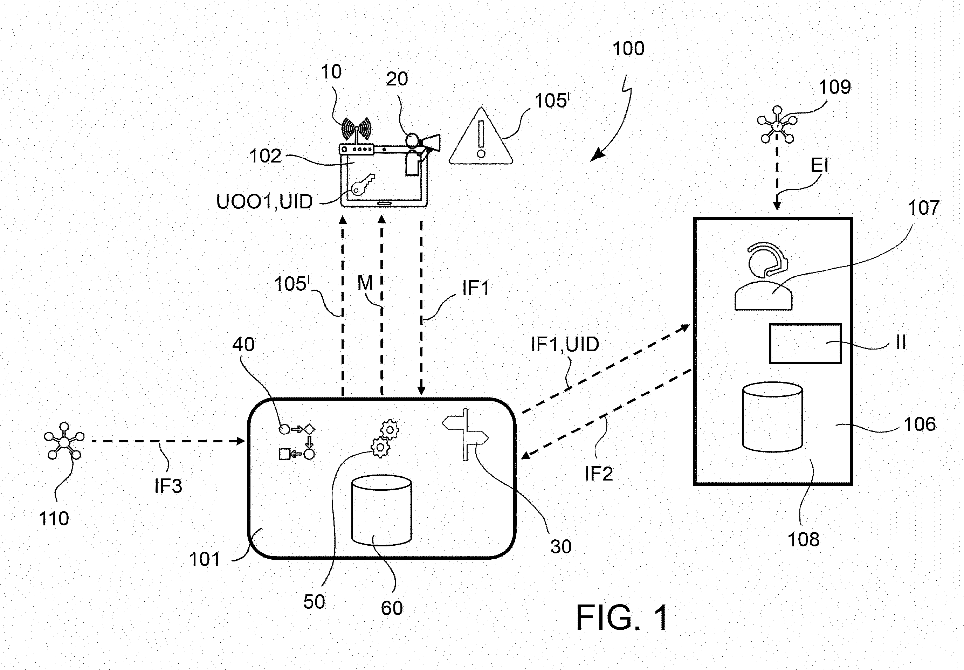

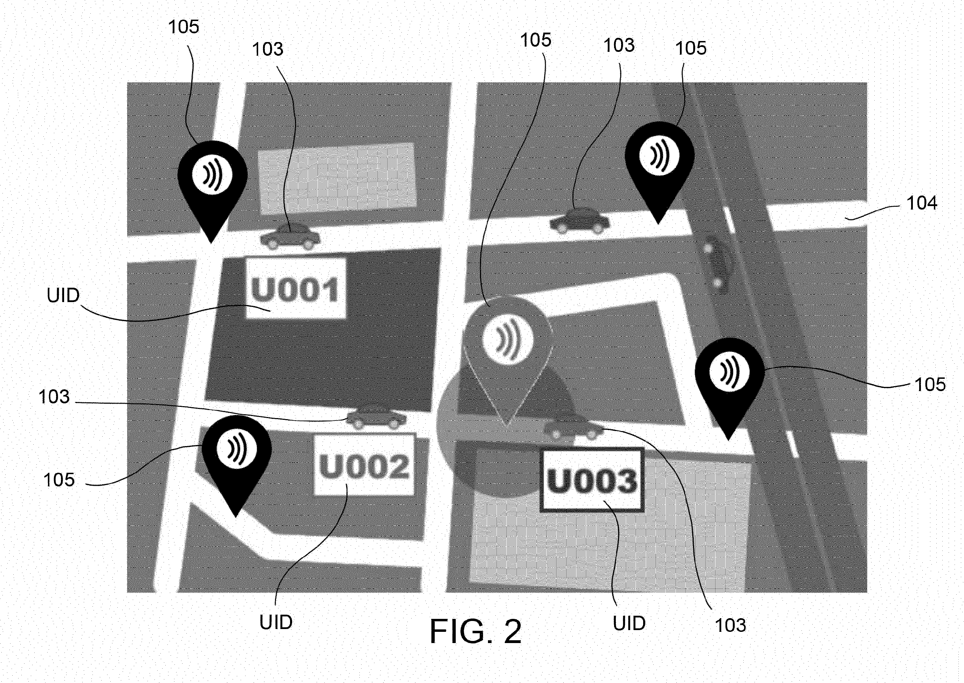

With reference to Figs. 1 and 2, the system 100 comprises an application server 101, e.g. an electronic calculator.

The system 100 further comprises a plurality of mobile devices 102 configured to run an application software.

One or more mobile devices of said plurality of mobile devices 102 are associated to a user on a vehicle 103 travelling a supervised road network 104.

Each mobile device of said plurality of mobile devices 102, via the application software, is configured to provide the application server 101 with a first plurality of information IF1 representative of the relative vehicle 103 travelling on a portion 104' of the supervised road network 104 on which the vehicle is travelling generating an unique identifier UID to be associated to the mobile device 102.

It should be noted that in the Fig. 2, a plurality of unique identifier UID has been indicated: a first unique identifier named as U001 has been associated to a first mobile device (not shown in the figure) present on a first vehicle, a second unique identifier named as U002 has been associated second mobile device (not shown in Fig. 2) to a second vehicle and a third unique identifier named as U003 has been associated to a third mobile device (not shown in Fig. 2) present on a third vehicle.

The unique identifier UID associated to the mobile device 102 represented in the Fig. 1 has been named as U001.

▪ With reference to the first plurality of information IF1 representative of the relative vehicle 103 travelling on a portion 104' of the supervised road network 104 on which the vehicle is travelling, it should be noted that said first plurality of information IF1 comprises at least the position of the mobile device 102.

In this regard, each mobile device of said plurality of mobile devices 102 comprises a position acquisition module 10.

The first plurality of information IF1 may also comprise direction of the vehicle on which the mobile device is present, speed of the vehicle on which the mobile device is present, points of passage of the vehicle on which the mobile device is present, hour of the passage, as well as vehicle conditions, vehicle type and so on.

Turning to the application server 101, it is configured to collect the first plurality of information IF1 and the unique identifier UID received by each mobile device of said plurality of mobile devices 102.

In addition, the application server 101 is further configured to recognize the presence of the application software running on a mobile device of said plurality of mobile devices 102 in a vehicle 103 travelling on a portion 104' of the supervised road network 104.

Furthermore, the application server 101 is configured to send to said mobile device 102 a message M comprising information representative of the road traffic condition of the portion 104' of the supervised road network 104 on which the relative vehicle 103 is travelling, with actions to be performed on the said portion 104, identified by the position of the mobile device 102, on the basis of the unique identifier UID of said mobile device 102.

In this regard, it should be noted that said mobile device 102 is further configured to send to the application server 101 a confirmation that said message M with the actions to be performed on the said portion 104 of the supervised road network 104 on which the relative vehicle 103 is travelling, sent by the application server 101, has been applied.

In addition, the application server 101 is further configured to provide said information comprised in said message M as a set of advanced virtual road signposts 105, in fixed locations on the supervised road network 104, with associated positions and directions.

It is worth nothing that for the purposes of the present description, with "fixed locations" it is meant a location which is not in any way an immovable location for an advanced virtual road signpost, but an "appropriate and established locations" for an advanced virtual road signpost, i.e. geo-localized positions, automatically generated by the system or manually generated through a control board by the road manager, in order to satisfy both the need to intercept traffic flows and the need to position each advanced virtual road signpost individually or in a group according to intervention policies and to information of the road manager, in accordance with the current regulations, the controlled road layout and the normal and emergency road conditions.

Information delivered by the advanced virtual road signposts comprises the triggering conditions upon recognition of a specific set of conditions defined by the road manager, the switch on of the relative action and the reactivation information of said actions (such as messages) upon recognition of specific conditions based (generically but not exclusively) on time and position of the mobile device, i.e. the application software running on it.

It should be noted that the advanced virtual road signposts, sent by the application server 101, belong to the group constituted by: general broadcast message; message limited within a specific section of a supervised route; message limited within a given influence area of virtual geostationary information panel for mobile devices moving in a specific direction; message limited to specific information towards a selected device or to a group of devices identified by a specific status, pattern or segment.

According to present invention, a mobile device of said plurality of mobile devices 102 running the application software is advantageously configured to recognize the presence of at least one advanced virtual road signpost 105' of the set of virtual road signposts 105 provided by the application server 101, on the portion 104' of the supervised road network 104.

The mobile device of said plurality of mobile devices 102, by the application software, is configured to receive and recognize at least one advanced virtual road signpost 105'.

In greater detail, the mobile device of said plurality of mobile devices 102, by the application software, is configured to recognize if conditions defined in the said advanced virtual road signpost are met and execute the associated actions (such as messages).

It should be noted that said mobile device 102, by means of the application software, is further configured to send to the application server 101 a confirmation that said actions to be performed associated to said information and/or to said at least one advanced virtual road signpost 105', comprised in the said message M, sent by the application server 101, have been applied.

It should be noted that the fact that said actions to be performed associated to said information and/or to said at least one advanced virtual road signpost 105' have been "applied" means that said actions to be performed associated to said information and/or to said at least one advanced virtual road signpost 105' have been "executed".

According to an embodiment, the system 100 further comprises a traffic manager module 106, shown in Fig. 1.

It is worth noting that for the purposes of the present description, "traffic manager module" may be intended as a server of an entity such as a team, a person, a company, a government body/institution, the police and so on.

In an embodiment, the traffic manager module 106 comprises a traffic management operator 107 able to manage the traffic manager module 106.

According to a further embodiment, the traffic manager module 106 further comprises a traffic manager store 108.

The traffic manager store 108 is configured to store and keep road manager information.

According to an embodiment, the traffic manager module 106 is configured to collect the first plurality of information IF1 and the unique identifier UID received by each mobile device of said plurality of mobile devices 102 collected by the application server 101.

In addition, the traffic manager module 106 is further configured to receive the confirmation from a mobile device of said plurality of mobile 102 that actions to be performed associated to said information and/or to said at least one advanced virtual road signpost 105', comprised in said message M, sent by the application server 101, have been applied to by said mobile device 102.

According to an embodiment, the traffic manager 106 is further configured to provide the application server 101 with a second plurality of information IF2 representative of the road traffic condition of the portion 104' of the supervised road network 104 identified by the position of the mobile device 102.

In this regard, the traffic manager module 106 is configured to generate said second plurality of information IF2 representative of the road traffic condition of the portion 104' of the supervised road network 104 on the basis of:
- first information II internal to the traffic manager module 106;
- second information EI external to the traffic manager module 106, provided by at least a first source of information 109 external to the traffic manager module 106;
- the collected first plurality of information IF1 and the unique identifier UID received by each mobile device of said plurality of mobile devices 102;
- the confirmation as received from a mobile device of said plurality of mobile devices 102 that said actions to be performed associated to said information and/or to said at least one advanced virtual road signpost 105', comprised in said message M, sent by the application server 101, have been applied by said mobile device 102.

It is worth noting that for the purposes of the present description:
"first information internal to the traffic manager module" may comprise all the usual management info, procedures and instruction any road management implies, such as roadworks timing and presence, gates and exits operating hours, lanes diversions, heavy load, special and hazardous material transports, tunnel closures, men at work on the route and so on.
"second information external to the traffic manager module" may comprise information received by a source of information external to the traffic manager module 106, i.e. external references, official channels such as police and other road services, weather reports, sensors and cctv cameras on the road, motorists and other users reports, government requests, toll stations reports, land and forest authorities warnings.

It should be noted that a first source of information external to the traffic manager 106 has been schematically represented and indicated with the reference number 109 in Fig. 1.

Turning to the application server 101, according to an embodiment, it is further configured to send the message M comprising the information representative of the road traffic condition of the portion 104' of the supervised road network 104 identified by the position of the mobile device 102 in the form of an advanced virtual road signposts.

In this regard, it should be noted that said mobile device 102 is further configured to send to the application server 101 the confirmation that said message M and/or said at least one advanced virtual road signpost 105', sent by the application server 101, has been received by the user and executed by the application software running on the mobile device of the user.

According to an embodiment, the application server 101 is further configured to associate to the advanced virtual road signposts actions (comprised in the message M) to be enforced and performed by the application software running on the mobile device of a user whenever trigger conditions are met (position, speed, time and so on).

Actions can be, but not limited to, text (comprised in the message M) to be synthetized by a TTS (Text To Speech) module of a mobile device, audio file to be downloaded and reproduced from a specified URL, specific information to be sent to the application server 101 from the mobile device itself, including embedded and external sensors or devices.

In this regard, as an example illustrated in Figs 1 and 2, each of the mobile device of the plurality of the mobile devices 102 comprises a TTS module 20.

According to another embodiment, illustrated in Fig. 1, the application server 101 further comprises an advanced virtual signpost import module 30, e.g. in the form of a software running on a specific hardware.

In addition, the application server 101 further comprises an advanced virtual signpost import module 40, e.g. in the form of a software running on a specific hardware.

Furthermore, the application server 101 comprises an advanced virtual signpost notification enforcement engine 50.

According to this embodiment, the application server 101 is configured to provide the set of advanced virtual road signposts 105, in fixed locations on the supervised road network 104, with associated positions and directions, information about conditions to be met and actions to be performed (comprised in the message M) and reactivation conditions.

In particular, the advanced virtual signpost import module 30 of the application server 101 is configured to import the second plurality of information IF2 as well as a third plurality of information IF3 upon the road traffic conditions of an identified portion 104' of the supervised road network 104.

The third plurality of information IF3 is provided by a second source of information 110, schematically represented in Fig. 2.

It is worth noting that for the purposes of the present description, the "third plurality of information upon the road traffic conditions" may comprise, but not limited to, information provided by CCTV control cameras and/or alarm sensors, pollution levels, havoc signalization, satellite imagery.

In addition, the advanced virtual signpost import module 40 is configured to translate said second plurality of information IF2 and said third plurality of information IF3 in advanced virtual road signposting.

It is worth noting that for the purposes of the present description, with the term "translate" it is meant change the representation of the same data without changing its semantics, that is represent the data contained in the action or message according to the final use of it, e.g. data to be transformed in text instruction to be - in turn - transformed into speech through the TTS function of the device.

In addition, the advanced virtual signpost notification enforcement engine 50 is configured to send said at least one advanced virtual signposts 105' to the mobile device 102.

In addition, the advanced virtual signpost notification enforcement engine 50 is configure to send a welcome message to the mobile device 102 indicating that the portion 104' of the supervised road network 104 is managed by the service platform corresponding to the application software running on the mobile device 102.

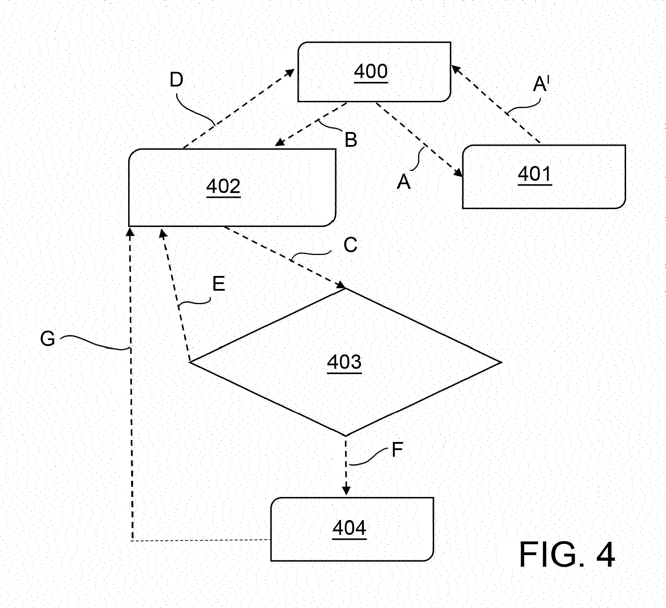

In this regard, with reference also to the finite state machine illustrated in Fig. 4, the operation of the advanced virtual signpost notification enforcement engine 50 is now described.

Block 400: idle state.

Block 401: updating a known advanced virtual signpost (A) received by the application server 101 and sending to the application server 101 the updated known virtual signpost (A').

Block 402: in the case the motion of a mobile device of the plurality of mobile device 102 is detected (B), listening to a position event received from a position acquisition module 10 of the detected mobile device.

In the case of a position event: block 403.

In the case the mobile device is still detected (D): block 400.

Block 403:

in the case there is any advanced virtual signpost having policies that met the position event which has been listened and conditions (F): block 404;

In the case there is not any advanced virtual signpost having policies that met the position event which has been listened and conditions (E): block 402.

Block 404: Enqueue advanced virtual signposts for action enforcement, then (G) block 402.

According to an embodiment, the application server 101 comprises a smart virtual signpost import module (not shown in the figures) configured to import the second plurality of information IF2 and the third plurality of information IF3 upon the road traffic conditions of an identified portion 104' of the supervised road network 104 and to translate (i.e. transform data into different outputs) said second plurality of information IF2 and said third plurality of information IF3 in advanced virtual road signposting.

According to an embodiment, the application server 101 is configured to provide the set of advanced virtual road signposts 105, in fixed locations on the supervised road, with associated positions and directions, conditions to be met, actions to be performed (comprised in the message M) and reactivation parameters.

According to an embodiment, shown in Fig. 1, the application server 101 further comprises a geo datastore module 60. The geo datastore module 60 is configured to store the set of advanced virtual road signposts 105.

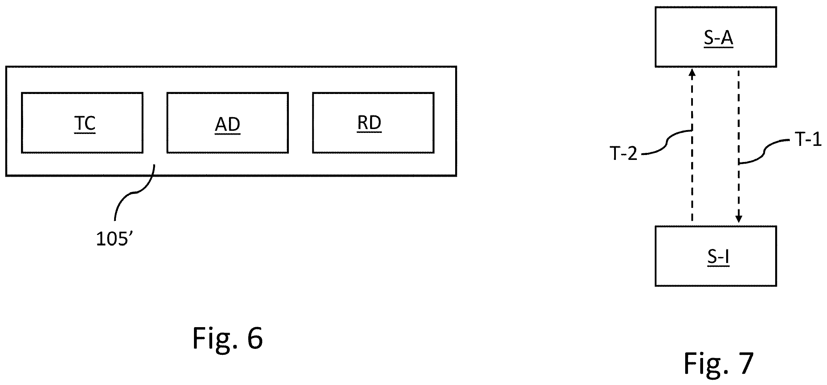

According to the embodiment, shown in Fig. 6 and Fig. 7, an advanced virtual road signpost 105' comprises trigger conditions TC, action information AD and reactivation conditions RD, i.e. building informative elements of an advanced virtual road signpost.

"Trigger conditions" are conditions that should be met in order to execute an action. Such conditions can include, but are not limited to, position, speed, direction, type of vehicle, time, unique identifier UID, active state of an action.

"Action information" are software operations that should be executed by the application software running on said mobile device 102 with support information included in the advanced virtual signal signpost.

"Reactivation conditions" are said conditions under which an already executed action should be set in active state by the application software running on the mobile device 102. Example of reactivation conditions are: delaying the same communication if the position of the application software in a predetermined period of time is not changed (as in the case of a stationary queue) or repeating it if the set action is a change of direction and the advanced virtual road signpost does not record it within a set time or position.

The mobile device 102 of a user, by the application software running on it, is configured to perform an advanced virtual road signpost 105' according to trigger conditions TC, action information AD and reactivation information RD of the advanced virtual road signpost 105'.

In this embodiment, the mobile device 102 of the user, by the application software running on it, is configured to set a state of an action associated to the advanced virtual road signpost 105' as "active" S-A or "inactive" S-I.

The mobile device 102 of the user, by the application software running on it, is configured to store into the mobile device 102 the state of the action associated in the advanced virtual road signpost 105'.

State "active" means that the action associated to the advanced virtual road signpost 105' is enabled to be executed when trigger conditions are met.

State "inactive" means that the action associated to the advanced virtual road signpost 105' is disabled and should not be executed even when and if trigger conditions are met.

In this embodiment, the mobile device 102 of the user, by the application software running on it, upon receiving an advanced virtual road signpost 105', is configured to set the state of any action associated to the advanced virtual road signpost 105' as "active" S-A and to store the state as "active" S-A into the mobile device 102.

According to an embodiment, in combination with the previous one, the mobile device 102 of the user, by the application software running on it, when the state of the action associated to the advanced virtual signpost 105' is active S-A and said action is executed, is configured to set the state of the action associated to the advanced virtual road signpost 105' as "inactive" S-I and to store the state as "in-active" S-I into the mobile device 102 (arrow T-1 in Fig. 7).

According to an embodiment, in combination with the previous ones, the mobile device 102 of the user, by the application software running on it, when the state of the action associated to the advanced virtual signpost 105' is inactive S-I and reactivation conditions of the advanced virtual road signpost 105' correspond to the reactivation conditions associated to the advanced virtual road signpost 105', is configured to set the state of the action associated to the advanced virtual road signpost 105' as "active" S-A and to store the state as "active" S-A into the mobile device 102 (arrow T-2 in Fig. 7).

According to an embodiment, in combination of the previous one, the application server 101 is configured to send the set of advanced virtual road signposts 105 by broadcasting said messages, which, when reactivation conditions associated to the advanced virtual road signpost 105' are met and the state of an action associated to the advanced virtual road signpost 105' is active S-A, will cause the mobile phone 102 to execute said action.

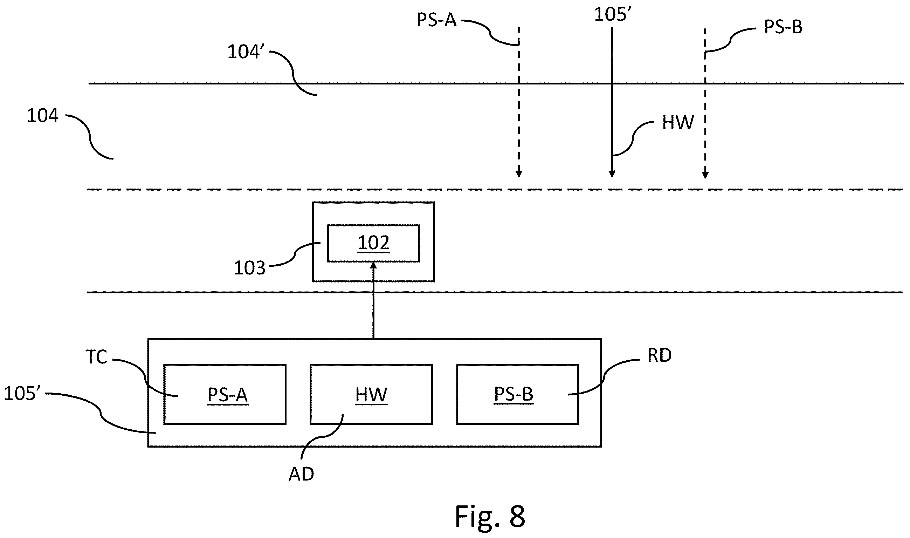

With reference to fig. 8, an advanced virtual road signpost 105' received by the mobile device 102 of a user on a vehicle 103 travelling on a portion 104' of a supervised road network 104 comprises:
- as a trigger condition TC, a first position PS-A of the mobile device 102 on a portion 104' of a supervised road network 104;
- as an action information AD, reading a message "Hello World" HW;
- as a reactivation condition RD, a second position PS-B of the mobile device 102 on the portion 104' of the supervised road network 104, the second position PS-B is subsequent the first position PS-A.

Upon receiving the advanced virtual road signpost 105', the state of the action is set as active S-A.

When the mobile device 102, then the vehicle 103, reaches the first position PS-A, the advanced virtual road signpost 105' is executed by the application software running on the mobile device 102 and the text message "Hello World" HW is read by the user on the mobile device 102. Upon executing the action, the state of the action is set as inactive S-I.

When the mobile device 102, then the vehicle 103, reaches the second position PS-A, the state of the action of the advanced virtual road signpost 105' is set as active S-A.

As an example, it should be noted that when the action associated to the advanced virtual road signpost 105' is "read a text" (comprised in the message M), it will be performed as audio messages by using the Text To Speech, TTS, technology in a mobile device of the plurality of the mobile devices.

According to another embodiment, the application server 101 is further configured to send to said mobile device 102 a message M comprising information representative of the road traffic condition of the portion 104' of the supervised road network 104 identified by the position of the mobile device 102, on the basis of the unique identifier UID of said mobile device 102, by broadcasting said message using a Text To Speech, TTS, technology. Upon execution of the action, the state of the action is set to inactive S-I.

According to the previous embodiments, it should be noted that said mobile device 102 is configured to send to the application server 101 a confirmation that said action to be performed associated to said information and/or to said at least one advanced virtual road signpost 105', comprised in the message M, sent by the application server 101, has been received and executed by the mobile phone 102, e.g. read to the user.

According to another embodiment, in combination with any of the previous embodiments, the application server 101 is configured to recognize the presence of the application software running on a mobile device of said plurality of mobile devices 102 in a vehicle 103 on a portion 104' of the supervised road network 104 by identifying the unique identifier UID associated to the mobile device 102 by the application software running on a mobile device of said plurality of mobile devices 102 in a vehicle travelling a portion 104' of the supervised road network 104.

According to an embodiment, in combination with the embodiment previously described, the application server 101 is configured to perform the step of identifying 513 by collecting the unique identifier UID of each mobile device 102 upon detecting their positions along different patterns and segmentations of the portion of the supervised road network 104.

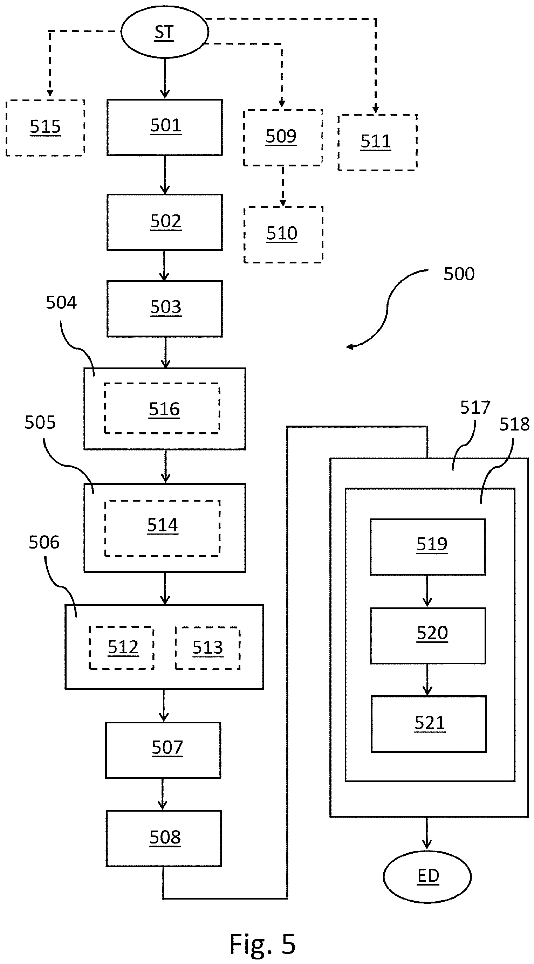

With reference also to Fig. 5, a method 500 for providing users with prompt information, instructions and advanced virtual road signposting about supervised road conditions is now described.

The method comprises a symbolic step of starting ST.

The method 500 comprises a step of running 501 an application software on a plurality of mobile devices 102, one or more mobile devices of said plurality of mobile devices 102 being associated to a user on a vehicle 103 travelling a supervised road network 104.

The application software generates a unique identifier UID to be associated to the mobile device 102.

The method 500 further comprising a step of providing 502, by each mobile device of said plurality of mobile devices 102, an application server 101 with a first plurality of information IF1 representative of the relative vehicle 103 travelling on a portion 104 of the supervised road network 104' on which the vehicle 103 is travelling associating to said first plurality of information IF1 the unique identifier UID of the mobile device 102.

The first plurality of information IF1 comprises, but is not limited to, at least the position of the mobile device 102.

The method 500 further comprises a step of collecting 503, by the application server 101, the first plurality of information IF1 and the unique identifier UID received by each mobile device of said plurality of mobile devices 102.

The method 500 further comprises a step of recognizing 504, by the application server 101, the presence of the application software running on a mobile device of said plurality of mobile devices 102 in a vehicle 103 on a portion 104' of the supervised road network 104.

The method 500 further comprises a step of sending 505, by the application server 101, to said mobile device 102 a message M comprising information representative of the road traffic condition of the portion 104' of the supervised road network 104 on which the relative vehicle is travelling, with actions to be performed on the said portion 104, identified by the position of the mobile device 102, on the basis of the unique identifier UID of said mobile device 102.

The method 500 further comprises a step of providing 506, by the application server 101, said information comprised in said message M as a set of advanced virtual road signposts 105, in fixed locations on the supervised road, with associated positions and directions.

It should be noted that a definition of a "fixed locations" on the supervised road has been previously provided.

The method 500 further comprises a step of recognizing 507, by a mobile device of said plurality of mobile devices 102 running the application software, the presence of at least one advanced virtual road signpost 105' of the set of virtual road signposts 105 provided by the application server 101, on the portion 104' of the supervised road network 104.

The method 500 further comprises a step of receiving 508, by said mobile device of said plurality of mobile devices 102 (by the application software running on it), the recognized at least one virtual road signpost 105'.

The method 500 further comprises a step of recognizing 508', by said mobile device of said plurality of mobile devices 102 (by the application software running on it), if conditions defined in the said advanced virtual road signpost 105' are met, and executing the associated actions (such as messages).

According to an embodiment, illustrated in dotted lines in Fig. 5, the method 500 further comprises the steps of:
- collecting 509, by a traffic manager module 106, the first plurality of information IF1 and the unique identifier UID received by each mobile device of said plurality of mobile devices 102 which responds to a verification of action executed, associated with their speed and direction and other specific and customizable information, collected by the application server 101;
- receiving 510, by the traffic manager module 106, a confirmation from a mobile device of said plurality of mobile devices 102 that said actions to be performed associated to said information and/or to said at least one advanced virtual road signpost 105', comprised in the message M, sent by the application server 101, have been applied by said mobile device 102.

According to an embodiment, represented in dotted lines in Fig. 5, the method 500 further comprises a step of providing 511, by the traffic manager module 106, the application server 101 with a second plurality of information IF2 representative of the road traffic condition of the portion 104' of the supervised road network 104 identified by the position of the mobile device 102, as well as instructions to the users on the behaviors to be followed in order to maximize traffic flow, reduce waiting times and minimize impediments to smooth circulation in safe conditions.

In this embodiment, the second plurality of information IF2 representative of the road traffic condition of the portion 104' of the supervised road network 104 are generated by the traffic manager module 106 on the basis of:
- first information II internal to the traffic manager module 106;
- second information IE external to the traffic manager module 106, provided by at least a first source of information 109 external to the traffic manager module 106;
- the collected first plurality of information IF1 and the unique identifier UID received by each mobile device of said plurality of mobile devices 102.
- the confirmation as received from a mobile device of said plurality of mobile devices 102 that said actions to be performed associated to said information and/or said at least one advanced virtual road signpost 105', comprised in the message M, sent by the application server 101, have been applied by said mobile device 102.

According to an embodiment, the message M comprising the information representative of the road traffic condition of the portion 104 of the supervised road network 104' identified by the position of the mobile device 102 are sent, by the application server 101, to the mobile device as advanced virtual road signposts, associating to the advanced virtual road signposts actions (comprised in the message M) to be performed by the mobile device 102 of the user whenever trigger conditions are met.

According to an embodiment, in combination with any one of the previously described, the step of providing 506, by the application server 101, a set of advanced virtual road signposts 105, in fixed locations on the supervised road network, with associated positions and directions, information about trigger conditions to be met, actions to be performed (comprised in the message M) and reactivation conditions, comprises steps of:
- importing 512, by an advanced virtual signpost import module 30 of the application server 101, the second plurality of information IF2 and a third plurality of information IF3 such as instructions and directions to the users on the behaviors to be followed in order to maximize traffic flow, reduce waiting times and minimize impediments to smooth circulation in safe conditions upon the road traffic conditions of an identified portion 104' of the supervised road network 104;
- translating 513, by an advanced virtual signpost import module 40 of the application server 101, said second plurality of information IF2 and said third plurality of information IF3 in advanced virtual road signposting.

According to the embodiment, previously described, an advanced virtual road signpost 105' comprises trigger conditions TC, action information AD and reactivation conditions RD.

"Trigger conditions", "Action information" and "Reactivation conditions" have been previously defined and described.

In this embodiment, the method 500 further comprises a step of performing 517, by the mobile device of said plurality of mobile devices 102, by the application software running on it, an advanced virtual road signpost 105' according to trigger information TC, action information AD and reactivation information RD of the advanced virtual road signpost 105'.

In this embodiment, the step of performing 517 comprises a step of setting 518, by the mobile device of said plurality of mobile devices 102, by the application software running on it, a state of an action associated to the advanced virtual road signpost 105' as "active" S-A or "inactive" S-I and storing, by the mobile device of said plurality of mobile device 102, by the application software running on it, the state of the action associated in the advanced virtual road signpost 105' into the mobile device 102.

The definition of state "active" and state "inactive" has been previously provided.

In this embodiment, the step of setting 518 and storing comprises steps of:
- upon receiving the advanced virtual road signpost 105', setting 519, by the mobile device of said plurality of mobile devices 102, by the application software running on it, the state of any action associated to the advanced virtual road signpost 105' as "active" S-A and storing the state as "active" S-A into the mobile device 102;
- when the state of the action associated to the advanced virtual signpost 105' is active and said action is executed, setting 520, by the mobile device of said plurality of mobile devices 102, by the application software running on it, the state of the action of the advanced virtual road signpost 105' as "inactive" S-I and storing the state as "inactive" S-I into the mobile device 102;
- when the state of the action associated to the advanced virtual signpost 105' is inactive S-I and reactivation conditions of the advanced virtual road signpost 105' correspond to the reactivation conditions associated to the advanced virtual road signpost 105', setting 521, by the mobile device of said plurality of mobile devices 102, by the application software running on it, the state of the action of the advanced virtual road signpost 105' as "active" S-A and to store the state as "active" S-A into the mobile device 102.

According to an embodiment, the set of advanced virtual road signposts 105, in fixed locations on the supervised road, with associated positions and directions, are provided by the application server 101 and delivered, when pre-set conditions and policies are met upon evaluation (for example but not limited to: time of the day, position, type of vehicle, etc.).

According to an embodiment, in combination with the previous one, the set of advanced virtual road signposts 105 are sent, by the applications server 101 and delivered, when required, in the form of audio messages by the mobile device by broadcasting said messages which, when reactivation conditions associated to the advanced virtual road signpost 105' are met and the state of an action associated to the advanced virtual road signpost 105' is active S-A, will cause the mobile phone 102 to execute said action.

As an example, when the action associated to the advanced virtual road signpost 105' is "read a text" (comprised in the message M), it will be performed as audio message, using the Text To Speech, TTS, technology in said mobile device.

According to an embodiment, in combination with any of the embodiments previously described and represented with dotted lines in Fig. 5, the step of sending 505, by the application server 101, to said mobile device 102 a message M, which comprises an advanced virtual road signpost 105', comprising the first plurality of information IF1 representative of the road traffic condition of the portion 104 of the supervised road network 104' identified by the position of the mobile device 102, on the basis of the unique identifier UID of said mobile device, comprises a step of broadcasting 514, by the application server 101, said message M.

According to the previous embodiments, the method 500 further comprises a step of sending 515, by the mobile device 102, to the application server 101 a confirmation that said action to be performed associated to said information and/or to said at least one advanced virtual road signpost 105', comprised in the message M, sent by the application server 101, has been received and executed by the mobile phone 102, e.g. listened to by the user.

According to an embodiment, in combination with any one of the embodiments previously described, the step of recognizing 504, by the application server 101, the presence of the application software running on a mobile device of said plurality of mobile devices in a vehicle on a portion of the supervised road network comprises a step of identifying 516, by the application server 101, the unique identifier UID associated to the mobile device 102 by the application software running on a mobile device of said plurality of mobile devices 102 in a vehicle 103 travelling on a portion 104' of the supervised road network 104 and evaluating if triggering conditions such as position, speed, direction, type of vehicle, nature of transport and others specific and customizable identifiers associated to the unique identifier UID of the software application are met in order to provide relevant information to be delivered by the appropriate and established advanced virtual road signpost 105' related to the specific portion of a supervised road.

According to an embodiment, in combination with the embodiment previously described, the step of identifying 516 is performed by the application server 101 by collecting the unique identifier UID of each mobile device 102 upon detecting their positions along different patterns and segmentations of the portion of the supervised road network 104.

According to a further embodiment, in combination with any of the embodiments previously described and represented with dotted lines in Fig. 4, the step of providing 511, by the traffic manager module 106, the application server 101 with the second plurality of information IF2 representative of the road traffic condition of the portion 104 of the supervised road network 104' identified by the position of the mobile device 102, is performed automatically, by a smart virtual signpost import module of the application server 101, or manually by a traffic management operator 107 of the traffic manager module 106.

In great detail, the smart virtual signpost import engine of the application server 101 queries or receives data from the traffic manager module 106 at regular intervals, on the basis of policies applied by the smart virtual signpost import engine, e.g. message typology, message validity hour, position (from a position to another position), priority level and so on.

According to an embodiment, in combination with any of the previous embodiments, the set of advanced virtual road signposts 105', sent by the application server 101, belongs to the group constituted by: general broadcast advanced virtual road signpost; message limited within a specific section of a supervised route; advanced virtual road signpost limited within a given influence area of virtual geostationary information panel for mobile devices moving in a specific direction; advanced virtual road signpost limited to specific information towards a selected device or to a group of devices identified by a specific status, pattern or segment.

According to an embodiment, in combination with any of the previous embodiments, the first of plurality of information IF1 collected by the application server 101 from each mobile device of said plurality of mobile devices 201 further comprises, as example, but not limited to, direction of the vehicle on which the mobile device is present, speed of the vehicle on which the mobile device is present, points of passage of the vehicle on which the mobile device is present, hour of the passage.

With reference again to the block diagram of Fig. 5, the method 500 comprises a symbolic step of ending ED.

With reference to above mentioned figures, an example of operation of the system 100 is now described.

A plurality of mobile device 102 runs an application software which generates a unique identifier UID to be associated to each mobile device 102.

An application server 101 is provided with a first plurality of information IF1 representative of the relative vehicle 103 travelling on a portion 104 of the supervised road network 104' on which the vehicle 103 is travelling associating to the first plurality of information IF1 the unique identifier UID of the mobile device 102. The first plurality of information IF1 comprises at least the position of the mobile device 102.

The application server 101 collects the first plurality of information IF1 and the unique identifier UID received by each mobile device of said plurality of mobile devices 102.

The application server 101 recognizes the presence of the application software running on the mobile device of said plurality of mobile devices 102 in a vehicle 103 on a portion 104' of the supervised road network 104.

. The application server 101 sends to said mobile device 102 a message M comprising information representative of the road traffic condition of the portion 104' of the supervised road network 104 on which the relative vehicle is travelling, with actions to be performed on the said portion 104, identified by the position and direction of the mobile device 102, on the basis of the unique identifier UID of said mobile device 102.

The application server 101 provides said information comprised in said message M as a set of advanced virtual road signposts 105, in fixed locations on the supervised road, with associated positions and directions, information about trigger conditions to be met, actions to be performed (comprised in the message M) and reactivation conditions.

A mobile device of said plurality of mobile devices 102 running the application software recognizes the presence of at least one advanced virtual road signpost 105' of the set of advanced virtual road signposts 105 provided by the application server 101, on the portion 104' of the supervised road network 104.

The mobile device of said plurality of mobile devices 102 receives the recognized at least one virtual road signpost 105'.

The mobile device, thanks to the application software running on itself, recognizes that triggers conditions of the at least one advanced virtual road signpost 105' are met, that the actions associated to the at least one advanced virtual road signpost are in an active state and so performs said actions according to the at least one virtual road signpost 105'.

The application software running on the mobile device 102 sends an acknowledgement (confirmation) to the application server 101 to inform that the actions have been performed on the mobile phone of the user for the UID associated with the mobile device (e.g. a TTS message has been read in the form of audio message).

When the mobile device 102 of the user, by the application software running on it, recognizes that reactivation conditions for the at least one advanced virtual road signpost 105' are met and the actions associated to the at least one advanced virtual road signpost 105' are set in an active state.

As can be noted, the object of the present invention is completely achieved.

Indeed, the method for providing users with prompt information, instructions and advanced virtual road signposting about supervised road conditions provides the users with as much as possible updated and reliable information and advanced virtual road signposting about the road conditions of the road on which they are travelling.

In addition, specific actions can be performed by the mobile device of the user in order to support their decisions during travelling on a specific portion of a road.

Furthermore, if a user is focusing his/her attention to a special driving situation, or his/her sight angle is obstructed by another vehicle, he/she is be able to take advantage of actions performed by his/her mobile device (e.g. listen to audio messages) broadcasted by the application server, without any distractions, therefore increasing safety for him/herself and other users on other vehicles.

Furthermore, according to the present invention, a road manager is enabled to have a clear understanding about the number of users that have been informed of the road conditions on the portion 104' of the supervised road network 104, and providing 506, by the application server 101, a set of advanced virtual road signposts 105, in fixed locations on the supervised road network 103, with associated positions and direction, this anticipates and fundamentally lays the groundwork for the future of C-ITS (Cooperative Intelligent Transport Systems), establishing the communication platform and, therefore, its use, in which it will easily integrate the standards currently being formulated by the European Union (EU).

The creation of a direct channel of communication between road management and users implies also major benefits in managing traffic flow continuously and during emergencies through official advices and instructions.

. The main, but not exhaustive, of these benefits indeed concern road safety, traffic management but extend to other, important, issues such as, as an example, the impact on the territory in terms of both road circulation and, for example, pollution levels, allowing, through the management of optimal vehicle use, control and moderation of these.

The method and system according to the present invention introduce Advanced Virtual Signs (AVS), i.e. advanced virtual road signposts, which are an innovative and feasible way to implement virtual road signs.

In particular, an Advanced Virtual Sign is composed of triggers, actions and reactivation logics and, with the ability to recognize the direction of the vehicle, extends the applicability of the concept of virtual signage, enabling new applications such as, by way of example but not limited to, monitoring of traffic flows, implementation of complex actions on the user terminal, reading of messages with TTS, thus providing the user of the system with wider and more innovative applications.

Those skilled in the art may make several changes and adaptations to the above-described embodiments of the method and related system, and may replace elements with others which are functionally equivalent in order to meet contingent needs, without departing from the scope of the following claims. Each of the features described as belonging to a possible embodiment may be achieved irrespective of the other embodiments described.

## Claims

1. Method (500) for providing users with prompt information, instructions and advanced virtual road signposting about supervised road conditions, comprising steps of:
- running (501) an application software on a plurality of mobile devices (102), one or more mobile devices of said plurality of mobile devices (102) being associated to a user on a vehicle (103) travelling a supervised road network (104), the application software generating an unique identifier (UID) to be associated to the mobile device (102);
- providing (502), by each mobile device of said plurality of mobile devices (102), an application server (101) with a first plurality of information (IF1) representative of the relative vehicle (103) travelling on a portion (104') of the supervised road network (104) on which the vehicle (103) is travelling associating to said first plurality of information (IF1) the unique identifier (UID) of the mobile device (102), said first plurality of information (IF1) comprising at least the position of the mobile device (102);
- collecting (503), by the application server (101), the first plurality of information (IF1) and the unique identifier (UID) received by each mobile device of said plurality of mobile devices (102);
- recognizing (504), by the application server (101), the presence of the application software running on a mobile device of said plurality of mobile devices (102) in a vehicle (103) on a portion (104') of the supervised road network (104);
- sending (505), by the application server (101), to said mobile device (102) a message (M) comprising information representative of the road traffic condition of the portion (104') of the supervised road network (104) identified by the position of the mobile device (102), on the basis of the unique identifier (UID) of said mobile device (102);
- providing (506), by the application server (101), a set of virtual road signposts (105), in fixed locations on the supervised road, with associated positions and directions;
- recognizing (507), by a mobile device of said plurality of mobile devices (102) running the application software, the presence of at least one virtual road signpost (105') of the set of virtual road signposts (105) provided by the application server (101), on the portion (104') of the supervised road network (104);
- receiving (508), by said mobile device of said plurality of mobile devices (102), the recognized at least one virtual road signpost (105');
- performing (517), by the mobile device (102) of said plurality of mobile devices (102), by the application software running on it, the advanced virtual road signpost (105') according to trigger information (TC), action information (AD) and reactivation details (RD) of the advanced virtual road signpost (105'),
the step of performing (517) comprising a step of setting 518, by said mobile device (102) of said plurality of mobile devices (102), by the application software running on it, a state of an action associated to the advanced virtual road signpost (105') as "active" (S-A) or "inactive" (S-I) and storing, by the mobile device (102) of said plurality of mobile devices (102), by the application software running on it, the state of the action associated in the advanced virtual road signpost (105') into the mobile device (102),
the step of setting (518) and storing comprises steps of:
- upon receiving the advanced virtual road signpost (105'), setting (519), by the mobile device of said plurality of mobile devices 102, by the application software running on it, the state of any action associated to the advanced virtual road signpost (105') as "active" (S-A) and storing the state as "active" (S-A) into the mobile device (102);
- when the state of the action associated to the advanced virtual signpost (105') is active and said action is executed, setting (520), by the mobile device of said plurality of mobile devices (102), by the application software running on it, the state of the action of the advanced virtual road signpost (105') as "inactive" (S-I) and storing the state as "inactive" (S-I) into the mobile device (102);
- when the state of the action associated to the advanced virtual signpost (105') is inactive (S-I) and reactivation conditions of the advanced virtual road signpost (105') correspond to the reactivation conditions associated to the advanced virtual road signpost (105'), setting (521), by the mobile device of said plurality of mobile devices (102), by the application software running on it, the state of the action of the advanced virtual road signpost (105') as "active" (S-A) and to store the state as "active" (S-A) into the mobile device (102).

2. Method (500) according to claim 1, wherein the advanced virtual road signpost (105') comprises trigger conditions (TC), action information (AD) and reactivation conditions (RD), said trigger conditions (TC) being conditions that should be met in order to execute an action, said action information (AD) are software operations that should be executed by the application software running on said mobile device with support information included in the advanced virtual signal signpost (105'), said reactivation conditions being said conditions under which an already executed action should be set in active state by the application software running on the mobile device.

3. Method (500) according to claims 1 or 2, further comprising steps of:
- collecting (509), by a traffic manager module (106), the first plurality of information (IF1) and the unique identifier (UID) received by each mobile device of said plurality of mobile devices (102) which responds to a verification of action executed, associated with their speed and direction and other specific and customizable information, collected by the application server (101);
- receiving (510), by the traffic manager module (106), a confirmation from a mobile device of said plurality of mobile devices (102) that said actions to be performed associated to said information and/or to said at least one virtual signpost (105'), comprised in the message (M), sent by the application server (101), has been applied by said mobile device (102).

4. Method (500) according to claim 3, further comprises a step of providing (511), by the traffic manager module (106), the application server (101) with a second plurality of information (IF2) representative of the road traffic condition of the portion (104') of the supervised road network (104) identified by the position of the mobile device (102), as well as instructions to the users on the behaviors to be followed in order to maximize traffic flow, reduce waiting times and minimize impediments to smooth circulation in safe conditions, said second plurality of information (IF2) representative of the road traffic condition of the portion (104') of the supervised road network (104) being generated by the traffic manager module (106) on the basis of:
- first information (II) internal to the traffic manager module (106);
- second information (EI) external to the traffic manager (106);
- the collected first plurality of information (IF1) and the unique identifier (UID) received by each mobile device of said plurality of mobile devices (102);
- the confirmation as received from a mobile device of said plurality of mobile devices (102) that said actions to be performed associated to said information and/or said at least one virtual road signpost (105'), comprised in the message (M), sent by the application server (101), has been applied by said mobile device (102).

5. Method (500) according to any of the previous claims 4, wherein the step of providing (506), by the application server (101), a set of virtual road signposts (105), in fixed locations on the supervised road network, with associated positions and directions comprises steps of:
- importing (512), by an advanced virtual signpost import module (30) of the application server (101), the second plurality of information (IF2) and a third plurality of information (IF3) such as instructions and directions to the users on the behaviors to be followed in order to maximize traffic flow, reducing waiting times and minimize impediments to smooth circulation in safe conditions upon the road traffic conditions of an identified portion (104') of the supervised road network (104);
- translating (513), by an advanced virtual signpost import module (40) of the application server (101), said second plurality of information (IF2) and said third plurality of information (IF3) in advanced virtual road signposting.

6. Method (500) according with any of the previous claims, wherein the set of virtual road signposts (105), in fixed locations on the supervised road, with associated positions and directions, are provided by the application server (101) and delivered, when pre-set conditions and policies are met upon evaluation.

7. Method (500) according to any of the previous claims, wherein the step of sending (505), by the application server (101), to said mobile device (102) a message (M) comprising information representative of the road traffic condition of the portion (104') of the supervised road network (104) identified by the position of the mobile device (102), on the basis of the unique identifier (UID) of said mobile device (102), comprises a step of broadcasting (514), by the application server (101), data that can be delivered, when required, in the form of audio messages by using Text To Speech, TTS, technology of the mobile device.

8. Method (500) according to claim 7, further comprises a step of sending (515), by the mobile device (102), to the application server (101) a confirmation that said action to be performed associated to said information and/or to said at least one advanced virtual road signpost (105'), comprised in the message (M), sent by the application server (101), has been received and executed by the mobile phone (102).

9. Method (500) according to any one of the previous claims, wherein the step recognizing (504), by the application server (101), the presence of the application software running on a mobile device of said plurality of mobile devices (102) in a vehicle (103) on a portion (104) of the supervised road network (104) comprises a step of identifying (516), by the application server (101), the unique identifier (UID) associated to the mobile device (102) by the application software running on a mobile device of said plurality of mobile devices (102) in a vehicle (103) travelling on a portion (104') of the supervised road network (104) and evaluating if triggering conditions such as position, speed, direction, type of vehicle, nature of transport and others specific and customizable identifiers associated to the unique identifier (UID) of the software application are met in order to provide relevant information to be delivered by the appropriate and established advanced virtual road signpost (105') related to the specific portion of a supervised road.

10. Method (500) according to any of the previous claims from 4 to 9, wherein the step of providing (511), by the traffic manager module (106), the application server (101) with the second plurality of information (IF2) representative of the road traffic condition of the portion (104') of the supervised road network (104) identified by the position of the mobile device (102), is performed automatically or manually by a traffic management operator (107) of the traffic manager module (106).

11. Method (505) according to any of the previous claims, wherein the set of virtual road signposts (105'), sent by the application server (101), belongs to the group constituted by: general broadcast advanced virtual road signpost; message limited within a specific section of a supervised route; advanced virtual road signpost limited within a given influence area of virtual geostationary information panel for mobile devices moving in a specific direction; advanced virtual road signpost limited to specific information towards a selected device or to a group of devices identified by a specific status, pattern or segment.

12. Method (500) according to any of the previous claims, wherein the first plurality of information (IF1) collected by the application server (101) from each mobile device of said plurality of mobile devices (102) comprises direction of the vehicle on which the mobile device is present, speed of the vehicle on which the mobile device is present, points of passage of the vehicle on which the mobile device is present, hour of the passage.

13. System (100) for providing users with prompt information, instructions and advanced virtual road signposting about supervised road conditions, comprising:
- an application server (101);
- a plurality of mobile devices (102) configured to run an application software, one or more mobile devices of said plurality of mobile devices (102) being associated to a user on a vehicle (103) travelling a supervised road network (104), each mobile device of said plurality of mobile devices (102), via the application software, being configured to provide the application server (101) with a first plurality of information (IF1) representative of the relative vehicle (103) travelling on a portion (104') of the supervised road network (104) on which the vehicle (103) is travelling generating an unique identifier (UID) to be associated to the mobile device (102), said first plurality of information (IF1) comprising at least the position of the mobile device (102);
the application server (101) being configured to collect the first plurality of information (IF1) and the unique identifier (UID) received by each mobile device of said plurality of mobile devices (102),
the application server (101) being configured to recognize the presence of the application software running on a mobile device of said plurality of mobile devices (102) in a vehicle (103) travelling on a portion (104') of the supervised road network (104),
the application server (101) being configured to send to said mobile device (102) a message (M) comprising information representative of the road traffic condition of the portion (104') of the supervised road network (104) on which the relative vehicle (103) is travelling, identified by the position of the mobile device (102), on the basis of the unique identifier (UID) of said mobile device (102),
the application server (101) being configured to provide a set of virtual road signposts (105), in fixed locations on the supervised road network (104), with associated positions and directions,
a mobile device of said plurality of mobile devices (102) running the application software being configured to recognize the presence of at least one virtual road signpost (105') of the set of virtual road signposts (105) provided by the application server (101), on the portion (104') of the supervised road network (104), said mobile device of said plurality of mobile devices (102) being configured to receive the recognized at least one virtual road signpost (105'),
the mobile device of said plurality of mobile devices (102) running the application software being configured to perform the advanced virtual road signpost (105') according to trigger information (TC), action information (AD) and reactivation information (RD) of the advanced virtual road signpost (105'),
the mobile device of said plurality of mobile devices (102) running the application software being configured to set a state of an action associated to the advanced virtual road signpost (105') as "active" (S-A) or "inactive" (S-I) and to store the state of the action associated in the advanced virtual road signpost (105') into the mobile device (102),
the mobile device of said plurality of mobile devices (102) running the application software being configured to:
- upon receiving the advanced virtual road signpost (105'), set the state of any action associated to the advanced virtual road signpost (105') as "active" (S-A) and storing the state as "active" (S-A) into the mobile device (102);
- when the state of the action associated to the advanced virtual signpost (105') is active and said action is executed, set the state of the action of the advanced virtual road signpost (105') as "inactive" (S-I) and storing the state as "inactive" (S-I) into the mobile device (102);
- when the state of the action associated to the advanced virtual signpost (105') is inactive (S-I) and reactivation conditions of the advanced virtual road signpost (105') correspond to the reactivation conditions associated to the advanced virtual road signpost (105'), set the state of the action of the advanced virtual road signpost (105') as "active" (S-A) and to store the state as "active" (S-A) into the mobile device (102).

14. System according to claim 13, wherein the advanced virtual road signpost (105') comprises trigger conditions (TC), action information (AD) and reactivation conditions (RD), said trigger conditions (TC) are conditions that should be met in order to execute an action, said action information (AD) are software operations that should be executed by the application software running on said mobile device with support information included in the advanced virtual signal signpost (105'), said reactivation conditions being said conditions under which an already executed action should be set in active state by the application software running on the mobile device.

15. System (100) according to claims 13 or 14, comprising a traffic manager module (106), the traffic manager module (106) being configured to collect the first plurality of information (IF1) and the unique identifier (UID) received by each mobile device of said plurality of mobile devices (102) collected by the application server (101), the traffic manager module (106) being further configured to receive a confirmation from a mobile device of said plurality of mobile devices (102) that said message (M), sent by the application server (101), has been received.
